# EUROPEAN PATENT APPLICATION

(11) **EP 4 645 018 A1**
(43) Date of publication of application: **05.11.2025**
(21) Application number: 23911821.9
(22) Date of filing: 18.12.2023
(51) Int. Cl.: G05D 1/243, G05D 1/43

(54) **MOBILE BODY CONTROL SYSTEM**

(30) Priority: 27.12.2022 JP 2022209673
(71) Applicant: KYOCERA Document Solutions Inc., Osaka-shi, Osaka 540-8585 (JP)
(72) Inventor: KONISHI Hidehisa, Osaka-shi, Osaka 540-8585 (JP)
(74) Representative: Winter, Brandl - Partnerschaft mbB
(86) International application number: PCT/JP2023/045278
(87) International publication number: WO 2024/143040

(57) **Abstract**

A front end scanner 12a of a mobile body 1 scans a floor surface part at a current position of the mobile body with a first resolution and thereby generates a first partial floor surface image, and a rear end scanner 12b scans a floor surface part at a current position of the mobile body 1 with a second resolution and thereby generates a second partial floor surface image. A mobile body position determining unit (a) derives a first current position corresponding to the first partial floor surface image, and (b) if an error of the first current position is small, considers the first current position as a current position of this mobile body or if an error of the first current position is large, derives a second current position corresponding to the second partial floor surface image and considers the second current position as a current position of this mobile body.

## Description

### Technical Field

The present invention relates to a mobile body control system.

### Background Art

A mobile body includes plural cameras at bottom parts in a front end and a rear end of its housing, and performs a predetermined image process for images of a floor surface photographed by the plural cameras and thereby estimates a position of the mobile body (see PATENT LITERATURE #1, for example).

### Citation list

### Patent literature

PATENT LITERATURE #1: Japan Patent Application Publication No. 2010-117847.

### Summary of invention

### Technical problem

In the aforementioned mobile body, the image process is performed for plural pieces of image data of the floor surface photographed by the plural cameras, and therefore, the image process should be performed for a large amount of the data. If a resolution of the photographed images is lowered, then the data amount is reduced, but a position of the mobile body is not correctly estimated, and it may be difficult to correctly move the mobile body.

The present invention has been conceived in view of the aforementioned problem, and it is an object of the present invention to obtain a mobile body control system that correctly moves a mobile body.

### Solution to problem

A mobile body control system according to the present invention includes a mobile body position determining unit that determines a current position of a mobile body that runs along a route in a predetermined area of a floor surface; a mobile body control unit that controls a behavior of the mobile body on the basis of the determined current position of the mobile body; a front end scanner that is arranged in a front end part of the mobile body and scans a floor surface part at the current position of the mobile body with a first resolution and thereby generates a first partial floor surface image; and a rear end scanner that is arranged in a rear end part of the mobile body and scans a floor surface part at the current position of the mobile body with a second resolution higher than the first resolution and thereby generates a second partial floor surface image. Further, the mobile body position determining unit (a) determines a position of the first partial floor surface image in a floor surface image of the whole predetermined area and derives a first current position corresponding to the determined position of the first partial floor surface image, (b) determines an error of the first current position from the route, and (c) on the basis of the determined error, determines whether (c1) the first current position is considered as a current position of this mobile body or (c2) a position of the second partial floor surface image in the floor surface image of the whole predetermined area is determined, a second current position corresponding to the determined position of the second partial floor surface image is derived, and the second current position is considered as a current position of this mobile body.

### Advantageous effect of invention

By means of the present invention, obtained is a mobile body control system that correctly moves a mobile body.

These and other objects, features and advantages of the present invention will become more apparent upon reading of the following detailed description along with the accompanied drawings.

### Brief description of drawings

[Figure 1] Fig. 1 shows a diagram that indicates a configuration of a mobile body control system according to an embodiment of the present invention.
[Figure 2] Fig. 2 shows a diagram that explains a floor surface on which a mobile body 1 in Fig. 1 runs.
[Figure 3] Fig. 3 shows a perspective-view diagram that indicates a mechanical configuration of the mobile body 1 in Fig. 1.
[Figure 4] Fig. 4 shows a diagram that indicates an example of a scanner 12a in the mobile body 1 shown in Fig. 3.
[Figure 5] Fig. 5 shows a diagram that indicates another example of a scanner 12a in the mobile body 1 shown in Fig. 3.
[Figure 6] Fig. 6 shows a block diagram that indicates an electronic configuration of the mobile body 1 in Fig. 1.
[Figure 7] Fig. 7 shows a block diagram that indicates a configuration of a management server 2 in Fig. 1.
[Figure 8] Fig. 8 shows a diagram that explains determination of a moving direction of the mobile body 1 by the mobile body control system shown in Fig. 1.
[Figure 9] Fig. 9 shows a flowchart that explains a behavior of the management server 2 in Fig. 1.

### Description of embodiments

Hereinafter, embodiments according to aspects of the present invention will be explained with reference to a drawing.

### Embodiment 1.

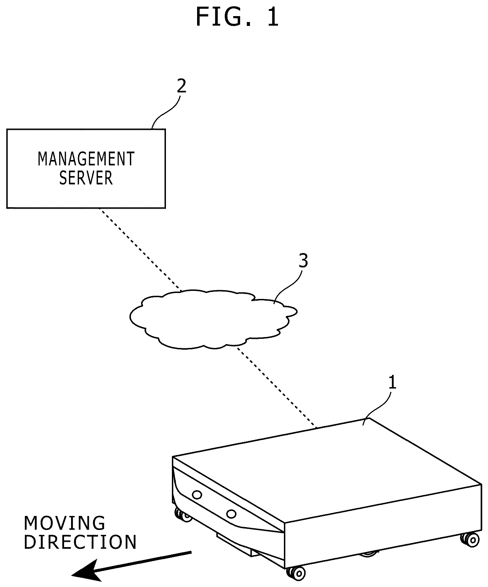

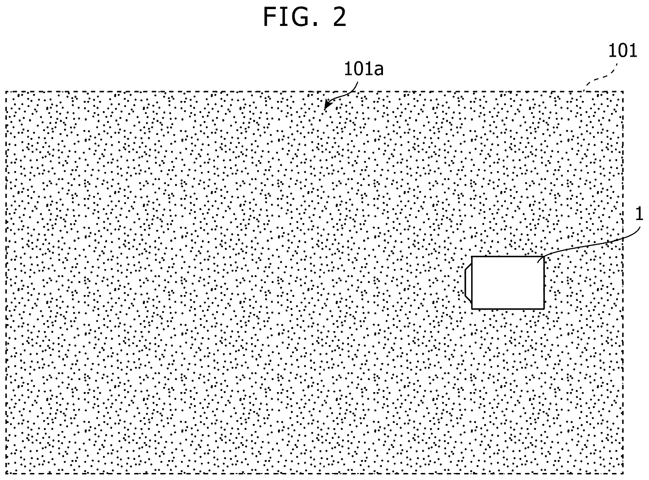

Fig. 1 shows a diagram that indicates a configuration of a mobile body control system according to an embodiment of the present invention. Fig. 2 shows a diagram that explains a floor surface on which a mobile body 1 in Fig. 1 runs. As shown in Fig. 1, this mobile body control system includes a mobile body 1 and a management server 2.

A mobile body 1 shown in Fig. 1 is a self-running mobile body, an AGV (Automatic Guided Vehicle), an AMR (Autonomous Mobile Robot), or the like. The mobile body 1 runs and moves along a predetermined route on a floor surface 101 of a predetermined area while optically scanning the floor surface 101 at a current position of this mobile body 1. In this mobile body control system, a marker or the like physically arranged as a route on the floor surface 101 is not required, and the management server 2 sets the route as data, searches for a part that agrees with a partial floor surface image at the current position of the mobile body 1 in a floor surface image of the predetermined area of the floor surface 101, determines an actual current position of the mobile body 1 on the basis of the position at which the part agrees with it, and controls a behavior of the mobile body 1 correspondingly to the set route and this current position.

Here, the floor surface 101 is a floor surface of a factory or warehouse, for example, and has not only an original pattern 101a (i.e. surface pattern of floor material such as tile or concrete) but a scratch, a stain or the like, and therefore, in the high-resolution surface image, image patterns at different positions are different. Therefore, for example, a current position of the mobile body 1 is uniquely determined using pattern matching, image search with machine learning or the like.

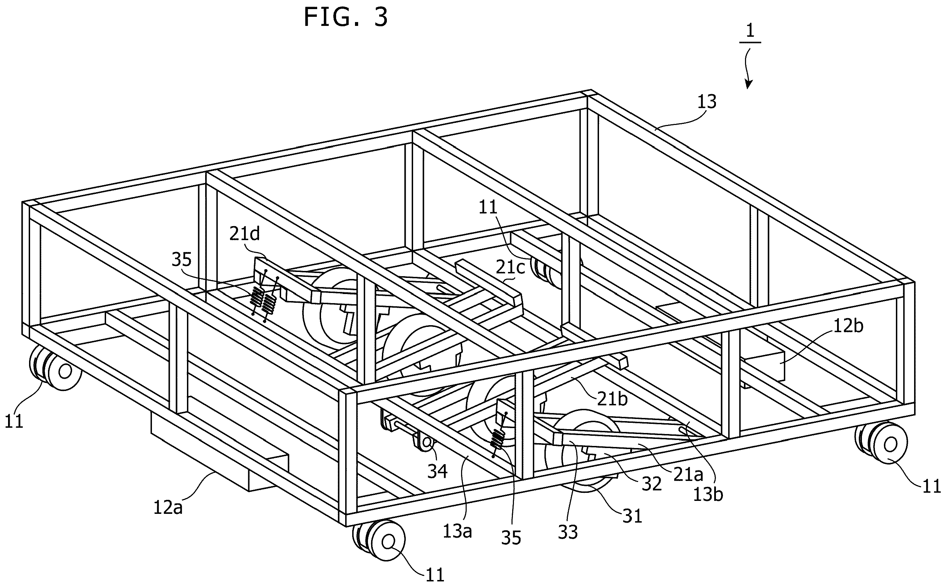

Fig. 3 shows a perspective-view diagram that indicates a mechanical configuration of the mobile body 1 in Fig. 1. As shown in Fig. 3, this mobile body 1 includes four casters 11 arranged at four corners of its bottom surface, scanners 12a, 12b, and a frame body 13 to which the casters 11 and the scanners 12a, 12b are fixed.

The caster 11 includes a driven wheel that contacts with a floor surface, and is fixed to the frame body 13 so as to be rotatable in a horizontal direction.

The scanner 12a is a front end scanner that is arranged in a front end part of the mobile body 1 in its moving direction and scans a floor surface part at a current position of the mobile body 1 with a first resolution and thereby generates a first partial floor surface image. The scanner 12b is a rear end scanner that is arranged in a rear end part of the mobile body 1 in its moving direction and scans a floor surface part at a current position of the mobile body 1 with a second resolution and thereby generates a second partial floor surface image. Thus, the scanners 12a, 12b optically scan a part of a floor surface 101 and thereby generates the first partial floor surface image and the second partial floor surface image. Here, the second resolution is higher than the first resolution. The first resolution and the second resolution are 300 dpi and 600 dpi, for example. The scanners 12a, 12b are arranged at different positions from each other, and therefore, the first and second partial floor surface images acquired at a time point are different from each other. However, a floor surface part photographed by the scanner 12a will be photographed by the scanner 12b when the mobile body 1 runs for a predetermined time.

Each of the scanners 12a, 12b (a) is arranged on a bottom surface side of this mobile body 1 facing the floor surface, and (b) repeatedly generates as a partial floor surface image a line image with a predetermined width perpendicular to a moving direction of this mobile body 1.

The frame body 13 is a body with a frame structure.

Further, this mobile body 1 includes driving wheel units 21a, 21b, 21c, 21d. Each of the driving wheel units 21a, 21b, 21c, 21d includes a driving wheel 31 that contacts with the floor surface, a supporting unit 32 that supports the driving wheel 31 so as to be rotatable, a wheel frame unit 33 fixed to the supporting unit 32, a rotatable supporting unit 34 that fixes an end of the wheel frame unit 33 to the frame body 13 (one of beams 13a, 13b) so as to be rotatable, and a spring member 35 that provides a force to the other end of the wheel frame unit 33 toward the frame body 13 (the other of the beams 13a, 13b). Consequently, by a restoring force of the spring member 35, the driving wheel 31 is pushed to the floor surface with a predetermined pressure.

Further, each of the driving wheel units 21a, 21b, 21c, 21d includes a driving device (not shown) that generates and transmits a driving force for running to the driving wheel 31. The driving devices are individually arranged to the driving wheel units 21a, 21b, 21c, 21d, respectively, and individually generate and transmit driving forces to the driving wheels 31. Here, the driving device generates the driving force using a motor, and transmits the driving force to the driving wheel 31 using a gear or the like. For example, the driving wheel 31 includes a driving shaft that connects to the driving device, a rigid wheel fixed to the driving shaft, and an elastic tire fitted around outside of the wheel.

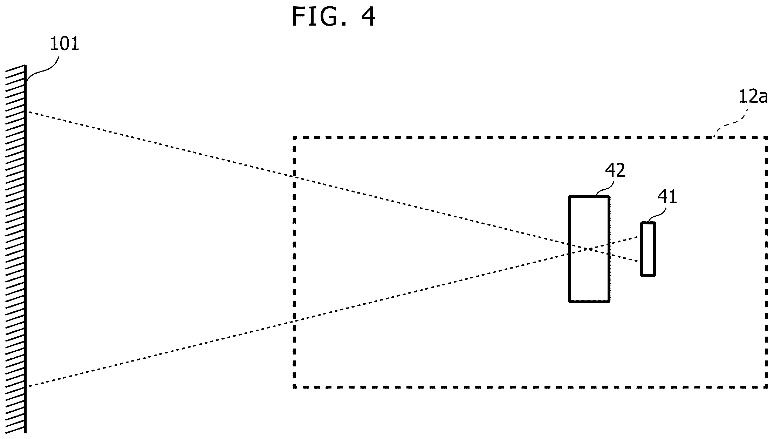

Fig. 4 shows a diagram that indicates an example of a scanner 12a in the mobile body 1 shown in Fig. 3. As shown in Fig. 4, for example, each of the scanners 12a, 12b includes a light emitting unit (not shown) that emits light to the floor surface, an image sensor 41, a shrinking optical system 42 (single or plural lenses) that converges to the image sensor 41 reflection light obtained by reflection of light from the light emitting unit on the floor surface.

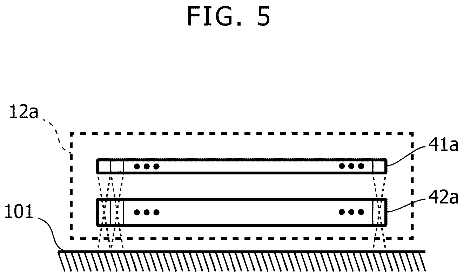

Fig. 5 shows a diagram that indicates another example of a scanner 12a in the mobile body 1 shown in Fig. 3. Further, as shown in Fig. 5, for example, the scanner 12a or 12b may include a contact image sensor. In such a case, the scanner 12a or 12 is a scanner of an equal magnification optical system that includes a line sensor 41a that includes plural photodetector elements, and a lens array 42a.

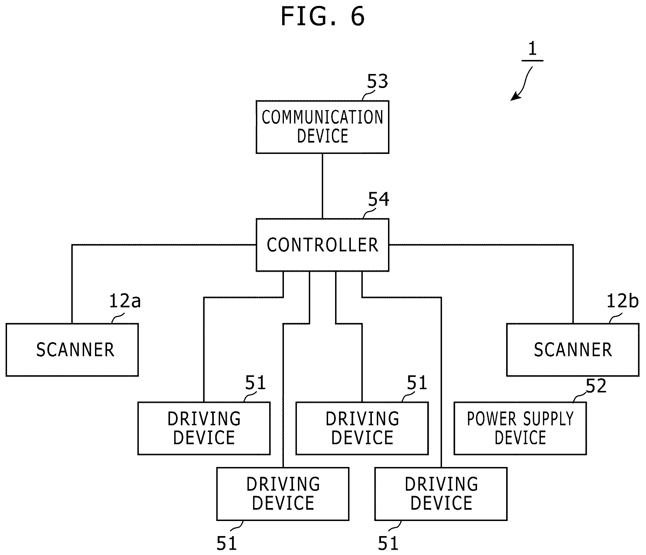

Fig. 6 shows a block diagram that indicates an electronic configuration of the mobile body 1 in Fig. 1. As shown in Fig. 6, the mobile body 1 includes not only the aforementioned driving devices 51 but a power supply device 52, a communication device 53, and a controller 54.

The power supply device 52 includes a secondary battery, for example, and supplies electric power to the driving devices 51, the communication device 53, and the controller 54. The power supply device 52 may include a charging circuit that is connected to a commercial power supply and charges the secondary battery. Further, the secondary battery may be detachable.

The communication device 53 performs data communication with an external device (server or the like) with wireless communication in accordance with a predetermined protocol.

The controller 54 includes a computer and/or an ASIC (Application Specific Integrated Circuit), and performs a data process, control of the driving devices 51, control of the communication device 53, and the like using the computer (software processing) and/or the ASIC (hardware processing).

In Embodiment 1, in accordance with a request from the controller 54, the communication device 53 (a) transmits the partial floor surface image or the line image (each of line images that form the partial floor surface image) to the management server 2, and receives from the management server 2 either the error between the current position of this mobile body 1 and the route or a control amount corresponding to the error, that is detected by the management server 2 on the basis of the partial floor surface image. Further, the controller 54 controls the driving devices 51 such that this mobile body 1 runs on the aforementioned route on the basis of the error or the control amount (control amount for each driving device 51) or controls the driving devices 51 to stop the mobile body 1.

Each of the first and second partial floor surface image consists of line images of a predetermined number of lines. The scanners 12a, 12b repeatedly generate line images with a predetermined width perpendicular to a moving direction of this mobile body 1, respectively, and an image conversion unit (not shown) buffers the line images and sets line images of a predetermined number of lines as the first and second partial floor surface images. This image conversion unit may be included by the mobile body 1 (the controller 54) or may be included by the management server 2.

Further, the partial floor surface image or the line images may be transmitted to the management server 2 after compressing it in the mobile body 1, and may be decompressed in the management server 2.

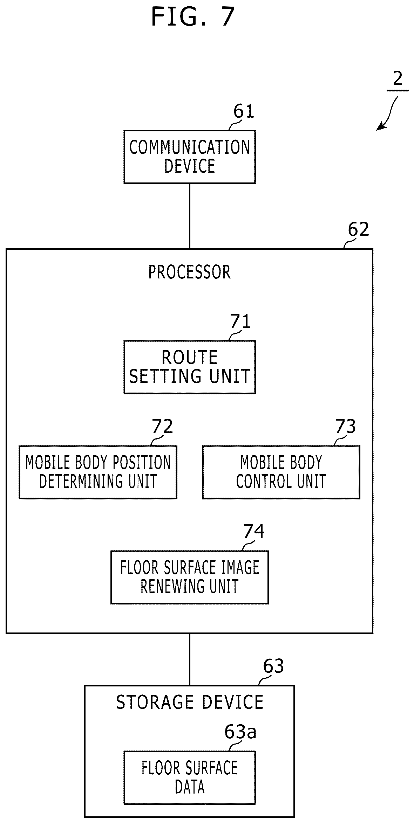

Fig. 7 shows a block diagram that indicates a configuration of a management server 2 in Fig. 1.

The management server 1 includes a communication device 61, a processor 62, and a storage device 63.

The communication device 61 performs data communication with the mobile body 1 through a predetermined communication path 3 (wireless communication path and/or wired communication path). For example, the communication device 61 is a wireless network interface, a data communication interface for a mobile telephone network, a near field wireless communication interface, or the like. Further, the communication path 3 may include a wireless station, the communication device 61 may connect to the wireless station through a wired communication path and the mobile body 1 may connect to the wireless station through a wireless communication path, and thereby the communication device 61 may be enabled to perform data communication with the mobile body 1.

The processor 62 is a computer that includes a CPU (Central Processing Unit), a ROM (Read Only Memory), a RAM (Random Access Memory) and the like, loads a program from the ROM or the storage device 63 to the RAM, and executes the program with the CPU and thereby acts as various processing units. Here, the processor 62 acts as a route setting unit 71, a mobile body position determining unit 72, a mobile body control unit 73, and a floor surface image renewing unit 74.

The storage device 63 is a non volatile storage device and stores data and a program. Here, in the storage device 63, floor surface data 63a has been stored.

The floor surface data 63a include image data of a floor surface image of a whole floor surface of the aforementioned predetermined area, and position data that indicates a relationship between a position in the floor surface image (pixel position) and an actual position on the floor surface. Using this image data, a position of the partial floor surface image in the floor surface image (i.e. a position of a part that is most similar to the floor surface image in the floor surface image) is determined; and using this position data, the position of the partial floor surface image in the floor surface image is converted to an actual position on the floor surface.

The route setting unit 71 sets as route data a route of the mobile body 1 in a predetermined area of the floor surface 101. For example, the route consists of one or plural links, and the route data includes coordinate values of a beginning point and an end position of each link. For example, the route setting unit 71 may connect to a Manufacturing Execution System (MES) and may set a route of the mobile body 1 in accordance with an operation (transportation of parts, or the like) of the mobile body 1 requested by the MES.

The mobile body position determining unit 72 determines a current position of the mobile body 1 that runs along a route in a predetermined area of the floor surface 101. Specifically, the mobile body position determining unit 72 (a) determines a position of the first partial floor surface image in a floor surface image of the whole predetermined area and derives a first current position corresponding to the determined position of the first partial floor surface image, (b) determines an error of the first current position from the aforementioned route (a distance from the route to the first current position), and (c) on the basis of the determined error, determines whether (c1) the first current position is considered as a current position (an actual position on the floor surface 101) of this mobile body 1 or (c2) a position of the second partial floor surface image in the floor surface image of the whole predetermined area is determined, a second current position corresponding to the determined position of the second partial floor surface image is derived, and the second current position is considered as a current position of this mobile body 1.

Here, the mobile body position determining unit 72 considers the first current position as a current position of this mobile body 1 (without determining a position of the second partial floor surface image) if the error is less than a predetermined threshold value; and determines a position of the second partial floor surface image in the floor surface image of the whole predetermined area, derives a second current position corresponding to the determined position of the second partial floor surface image, and considers the second current position as a current position of this mobile body 1, if the error is equal to or larger than the predetermined threshold value.

Further, if at a time point, both of the first and second current positions are derived, the mobile body position determining unit 72 determines a moving direction of the mobile body 1 on the basis of both of the first and second current positions.

The current position of the mobile body 1 is expressed as a physical distance from a predetermined reference position on the floor surface 101, for example. Further, a position of the partial floor surface image in the floor surface image of the whole predetermined area is expressed as a pixel position or the like in the floor surface image of the whole predetermined area, and a relationship is known between a current position of the mobile body 1 and a position of the partial floor surface image.

The scanners 12a and 12b repeatedly generate the first partial floor surface image and the second partial floor surface image with a predetermined time interval int, and the mobile body position determining unit 72 determines a moving direction θ(t) of the mobile body on the basis of both of the first partial floor surface image and the second partial floor surface image.

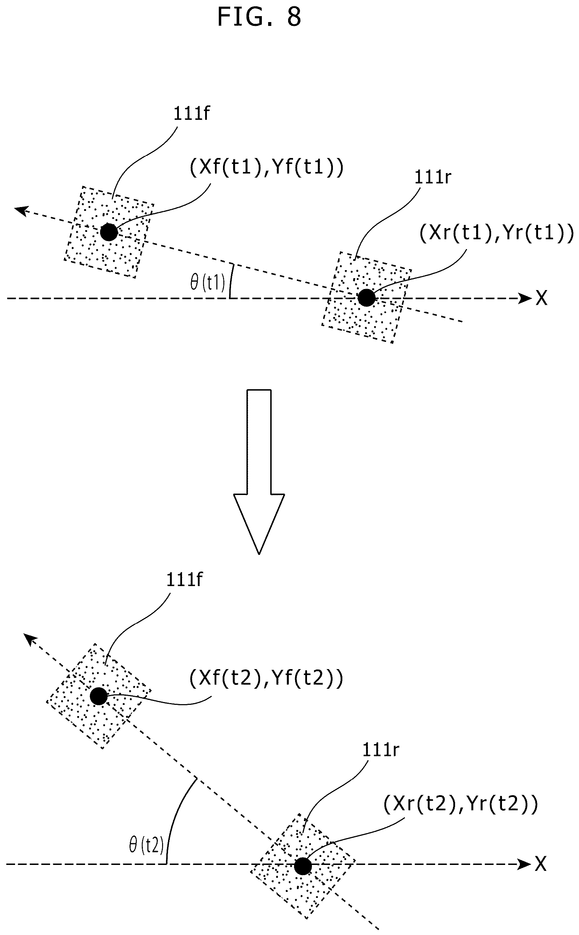

Fig. 8 shows a diagram that explains determination of a moving direction of the mobile body 1 by the mobile body control system shown in Fig. 1. For example, as shown in Fig. 8, on the basis of the first partial floor surface image 111f and the second partial floor surface image 111r respectively acquired at time t1 and time t2 (= t1 + int), the mobile body position determining unit 72 derives the first current positions (Xf(t1), Yf(t1)), (Xf(t2), Yf(t2)) and the second current positions (Xr(t1), Yr (t1)), (Xr(t2), Yr(t2)), determines the moving direction θ(t1) at time t1 on the basis of the first current position (Xf(t1), Yf(t1)) and the second current position (Xr(t1), Yr(t1)) at time t1, and determines the moving direction θ(t2) at time t2 on the basis of the first current position (Xf(t2), Yf(t2)) and the second current position (Xr(t2), Yr(t2)) at time t2.

Further, the mobile body position determining unit 72 determines whether the mobile body 1 turned or not on the basis of the moving directions θ(t1), θ(t2) at time t1, t2. Specifically, if a difference between the moving directions θ(t1), θ(t2) exceeds a predetermined threshold value, it is determined that the mobile body 1 turned.

The mobile body position determining unit 72 acquires the first and second partial floor surface images using the communication device 61. The floor surface image and the partial floor surface image may be color image data generated by the color scanners 12a, 12b or may be grayscale image data generated by the monochrome scanners 12a, 12b.

Further, the mobile body position determining unit 72 determines a position of the partial floor surface image in the floor surface image of the aforementioned whole predetermined area using pattern matching or image search with machine learning, for example. At that time, even if a part of the floor surface image of the aforementioned whole predetermined floor surface and the partial floor surface image does not completely agree with each other, a position with a highest accuracy in the floor surface image of the whole predetermined floor surface is determined as a position of the partial floor surface image.

Returning to Fig. 7, the mobile body control unit 73 controls a behavior of the mobile body 1 on the basis of the determined current position (or the current position and the moving direction) of the mobile body 1. In Embodiment 1, the mobile body control unit 73 transmits to the mobile body 1 an operation instruction based on the determined current position (or the current position and the moving direction) using the communication device 61 and thereby controls a behavior of the mobile body 1.

Further, specifically, the mobile body control unit 73 causes the mobile body 1 to run so as to reduce an error between the route set by the route setting unit 71 and the current position of the mobile body 1 on the basis of a direction of the route and the moving direction of the mobile body 1 (for example, causes the mobile body 1 to turn corresponding to an amount of the error and/or a slope of the moving direction θ(t) from the direction of the route).

The slope of the moving direction θ(t) from the direction of the route is derived as a difference between a direction (an angle) of the route at the current position and the moving direction θ(t). Further, the slope of the moving direction from the direction of the route may be derived on the basis of an error obtained from the first partial floor surface image (a distance from the route to the first current position) and an error obtained from the second partial floor surface image (a distance from the route to the second current position).

Further, if the determined current position is a stop position, the mobile body control unit 73 stops the mobile body 1.

If a rotation speed of the driving wheels 31 of the driving wheel units 21a, 21b and a rotation speed of the driving wheels 31 of the driving wheel units 21c, 21d are set to be equal to each other, then the mobile body 1 runs straight; and if a rotation speed of the driving wheels 31 of the driving wheel units 21a, 21b and a rotation speed of the driving wheels 31 of the driving wheel units 21c, 21d are set to be different from each other, then the mobile body 1 turns. Therefore, so as to reduce the aforementioned error, the driving device 51 of each of the driving wheel units 21a, 21b, 21c, 21d is individually controlled.

The floor surface image renewing unit 74 renews with the acquired partial floor surface image a part at the partial floor surface image was determined in the floor surface image of the aforementioned whole predetermined area. Consequently, even if a change (aging change, attachment of stain or the like) of the floor surface 101 occurs, a part that the mobile body 1 passes in the floor surface image of the whole predetermined area is renewed with a latest floor image, and therefore, a detection error at a current position in the mobile body position determining unit 72 is restrained.

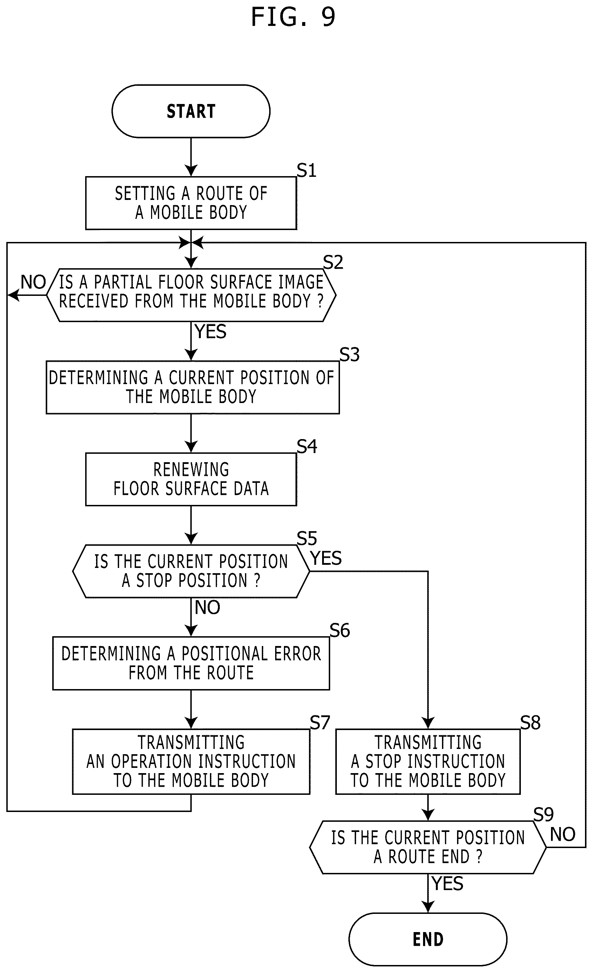

In the following part, a behavior of the aforementioned mobile body control system is explained. Fig. 9 shows a flowchart that explains a behavior of the management server 2 in Fig. 1.

The route setting unit 71 of the management server 2 sets a route of the mobile body 1 in accordance with a user operation or the like (Step S1). For example, route data that indicates the route has been stored in the storage device 63, and the route setting unit 71 reads the route data and sets the route of the mobile body 1.

Afterward, the mobile body control unit 73 transmits to the mobile body 1 an operation instruction to start running the mobile body 1, using the communication device 61. In the mobile body 1, the controller 54 receives the operation instruction using the communication device 53, and controls the driving devices 51 and thereby starts running the mobile body 1. Afterward, the mobile body 1 (a) upon receiving the operation instruction, controls the driving devices 51 and thereby adjusts running of the mobile body 1 (for example, causes the mobile body 1 to turn to the right or the left to be close to the route) and (b) while running, causes the scanners 12a, 12b to operate and thereby repeatedly acquires line images and transmits to the management server 2 (image data of) either the line images or the first and second partial floor surface images of the scanners 12a, 12b, using the communication device 53.

In the management server 2, when receiving the line images or the first and second partial floor surface images using the communication device 61 (Step S2), the mobile body position determining unit 72 determines an actual current position of the mobile body 1 using pattern matching or the like (Step S3). Here, the mobile body position determining unit 72 searches for the first partial floor surface image in the whole floor surface image, determines a position of the first partial floor surface image in the whole floor surface image, and derives the aforementioned first current position. Subsequently, the mobile body position determining unit 72 derives an error of the first current position from the route, and determines whether the aforementioned second current position should be determined or not correspondingly to the error. If it is determined that the second current position should not be determined, then without determining the second current position, the first current position is considered as a current position of this mobile body. Contrarily, if it is determined that the second current position should be determined, then the second current position is determined and considered as a current position of this mobile body.

If the line images are received, the line images of a predetermined number of lines of the scanners 12a, 12b are individually buffered and used as the first and second partial floor surface images. Upon determining positions of the first partial floor surface image and the second partial floor surface image in the whole floor surface image, the floor surface image renewing unit 74 renews a corresponding part in the whole floor surface image with the received first and second partial floor surface images in the floor surface data 63a.

Subsequently, the mobile body control unit 73 determines whether the determined current position is a stop position or not (Step S5). If the determined current position is not a stop position, the mobile body control unit 73 determines an error between the route and the current position of the mobile body 1 (Step S6), and transmits as an operation instruction to the mobile body 1 either an error amount of the error and a slope of the moving direction from the direction of the route or a control amount for the mobile body 1 corresponding to them so as to reduce the error (Step S7). Afterward, returning to Step S2, for next partial floor surface images, the processes in and after Step S3 are performed. If the error does not appear, without transmitting an operation instruction, the mobile body 1 is caused to maintain running with a current direction and current speed. Contrarily, if the determined current position is a stop position, the mobile body control unit 73 transmits a stop instruction to the mobile body 1 using the communication device 61 (Step S8). Subsequently, the mobile body control unit 73 determines whether the determined current position (or this stop position) is an end of the route or not (Step S9), and if the determined current position (or this stop position) is an end of the route, then terminates running of the mobile body 1 on this route.

Contrarily, if the determined current position (or this stop position) is not an end of the route, then when a predetermined condition (finishing a predetermined operation by the mobile body 1 at this position, receiving a running restart instruction from the management server 2, or the like) is satisfied, the mobile body 1 restarts running on the route. Afterward, returning to Step S2, for next partial floor surface images, the processes in and after Step S3 are performed.

As mentioned, in the aforementioned Embodiment 1, the mobile body position determining unit 72 determines a current position of the mobile body 1 that runs along a route in a predetermined area of a floor surface 101. The mobile body control unit 73 controls a behavior of the mobile body 1 on the basis of the determined current position of the mobile body 1. The scanner 12a is arranged in a front end part of the mobile body 1 and scans a floor surface part at the current position of the mobile body 1 with a first resolution and thereby generates a first partial floor surface image, and the scanner 12b is arranged in a rear end part of the mobile body 1 and scans a floor surface part at the current position of the mobile body 1 with a second resolution higher than the first resolution and thereby generates a second partial floor surface image. Further, the mobile body position determining unit 72 (a) derives a first current position corresponding to the first partial floor surface image, and (b) if an error of the first current position is small, considers the first current position as a current position of this mobile body or if an error of the first current position is large, derives a second current position corresponding to the second partial floor surface image and considers the second current position as a current position of this mobile body.

Consequently, if an error of the first current position is small, the current position is determined on the basis of the first partial floor surface image of a low resolution, and therefore, a data amount of an image process to derive the current position is small. Further, if an error of the first current position is large, the current position is determined on the basis of the first partial floor surface image of a high resolution, and therefore, the mobile body 1 can be correctly moved.

### Embodiment 2.

In Embodiment 2, the management server 2 is not installed, and the mobile body 1 includes the storage device 63 (the floor surface data 63a), the route setting unit 71, the mobile body position determining unit 72, the mobile body control unit 73, and the floor surface image renewing unit 74. Thus, without using the aforementioned management server 2, the mobile body 1 maintains the floor surface image of the whole floor surface 101 (i.e. a movement area of the mobile body 1), and determines a position of the partial floor surface image in the floor surface image, determines an actual current position corresponding to this position, and autonomously controls running and stopping as well.

Other parts of the configuration and behaviors of the mobile body 1 according to Embodiment 2 are identical or similar to those in Embodiment 1, and therefore not explained here.

Further, it should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

For example, in the aforementioned Embodiment 1 or 2, a deceleration position may be set at a position before the stop position on the route, and if the current position is the deceleration position, the mobile body 1 may be caused to be decelerated and approach the stop position. Further, if a braking distance from the stop instruction to actual stopping is known, the stop position may be set at the braking distance before an actual stop position.

Furthermore, in the aforementioned Embodiment 1 or 2, the route setting unit 71 may set respective sets of route data to plural mobile bodies 1 as well, and the mobile body position determining unit 72 may determine respective current positions of the plural mobile bodies 1 as well, and the mobile body control unit 73 may control respective behaviors of plural mobile bodies 1 as well.

Furthermore, in the aforementioned Embodiment 1 or 2, the mobile body position determining unit 72 may derive both of the first current position and the second current position, and may derive a current position and a moving direction of the mobile body 1 on the basis of both of the first current position and the second current position.

### Industrial applicability

For example, the present invention is applicable to a mobile body control system.

## Claims

1. A mobile body control system, comprising:
a mobile body position determining unit that determines a current position of a mobile body that runs along a route in a predetermined area of a floor surface;
a mobile body control unit that controls a behavior of the mobile body on the basis of the determined current position of the mobile body;
a front end scanner that is arranged in a front end part of the mobile body and scans a floor surface part at the current position of the mobile body with a first resolution and thereby generates a first partial floor surface image; and
a rear end scanner that is arranged in a rear end part of the mobile body and scans a floor surface part at the current position of the mobile body with a second resolution higher than the first resolution and thereby generates a second partial floor surface image;
wherein the mobile body position determining unit (a) determines a position of the first partial floor surface image in a floor surface image of the whole predetermined area and derives a first current position corresponding to the determined position of the first partial floor surface image, (b) determines an error of the first current position from the route, and (c) on the basis of the determined error, determines whether (c1) the first current position is considered as a current position of this mobile body or (c2) a position of the second partial floor surface image in the floor surface image of the whole predetermined area is determined, a second current position corresponding to the determined position of the second partial floor surface image is derived, and the second current position is considered as a current position of this mobile body.

2. The mobile body control system according to claim 1, wherein the mobile body position determining unit considers the first current position as a current position of this mobile body if the error is less than a predetermined threshold value; and determines a position of the second partial floor surface image in the floor surface image of the whole predetermined area, derives a second current position corresponding to the determined position of the second partial floor surface image, and considers the second current position as a current position of this mobile body, if the error is equal to or larger than the predetermined threshold value.

3. The mobile body control system according to claim 1, wherein the mobile body position determining unit determines a moving direction of the mobile body on the basis of both of the first current position and the second current position; and
the mobile body control unit controls a behavior of the mobile body so as to reduce the error on the basis of the determined moving direction and the current position of the mobile body.

4. The mobile body control system according to claim 1, wherein the front end scanner and the rear end scanner repeatedly generate the first partial floor surface image and the second partial floor surface image, respectively; and
the mobile body position determining unit repeatedly determines the moving direction of the mobile body, and determines whether the mobile body turned or not.

5. The mobile body control system according to claim 1, wherein the front end scanner and the rear end scanner generate a line image with a predetermined width perpendicular to the moving direction of this mobile body and repeatedly generate line images of predetermined number of lines as the first partial floor surface image and the second partial floor surface image.

6. The mobile body control system according to claim 1, further comprising a management server;
wherein the management server comprises a communication device, the mobile body position determining unit, and the mobile body control unit;
the mobile body position determining unit acquires the first partial floor surface image and the second partial floor surface image using the communication device; and
the mobile body control unit transmits an operation instruction based on the determined current position of the mobile body to the mobile body using the communication device and thereby controls a behavior of the mobile body.
